**Europäisches Patentamt**

**European Patent Office**

**Office européen des brevets**

(19)

(11) Publication number:

**0 112 805**

**B1**

(12)                     EUROPEAN PATENT SPECIFICATION

(45) Date of publication of patent specification: **09.09.87**

(51) Int. Cl.⁴: **B 21 C 1/30,** B 21 C 1/28, F 16 H 25/12

(21) Application number: **83830275.0**

(22) Date of filing: **21.12.83**

(54) Device to operate the movement of a draw carriage.

(30) Priority: **23.12.82 IT 8350582**
**23.12.82 IT 8350782**

(43) Date of publication of application:
**04.07.84 Bulletin 84/27**

(45) Publication of the grant of the patent:
**09.09.87 Bulletin 87/37**

(84) Designated Contracting States:
**AT BE CH DE FR GB LI LU NL SE**

(56) References cited:
**DE-B-2 322 279**
**DE-B-2 806 380**
**DE-C- 295 282**
**DE-C- 701 367**
**FR-A-2 349 376**
**GB-A- 829 519**
**GB-A-1 112 917**
**US-A-3 374 684**

(73) Proprietor: **DANIELI & C. OFFICINE**
**MECCANICHE S.p.A.**
**Via Nazionale, 19**
**I-33042 Buttrio (UD) (IT)**

(73) Proprietor: **DANIELI NATISONE Spa**
**Via Azzida, 152**
**I-33049 San Pietro Al Natisone (UD) (IT)**

(72) Inventor: **Paraskevas, Elefterios**
**Maarweg 18**
**D-5100 Aachen (DE)**

(74) Representative: **Petraz, Gilberto Luigi**
**G.L.P. S.a.s. di Gilberto Petraz P.le Cavedalis 6/2**
**I-33100 Udine (IT)**

Courier Press, Leamington Spa, England.

## Description

This invention concerns a device to operate the movement of a draw carriage. To be more exact, the invention concerns a device to operate the carriage which bears the grippers that clamp the piece to be drawn, together with a drum that bears a control cam.

Various systems to govern the reciprocating movement of the carriage that bears the grippers are known and are derived substantially from the cooperation of at least one cam-follower roller with a cam developed on a drum.

In particular, reference is made here to a cam element developed over one single full revolution of the drum.

The present invention therefore concerns a device to operate the movement of a draw carriage, the device comprising at least one control drum which bears on its circumference a cam closed in a ring extending over a revolution of 360°, the cam cooperating with at least one thrust roller substantially fixed solidly to the carriage that bears grippers, in which device the cam has a circumferential shape with two parallel opposed guide paths extending substantially radially at right angles to the axis of the drum, one of which guide paths cooperates with the thrust roller, whereas the other guide path cooperates with a resiliently resisted re-setting roller.

Such a device is disclosed in US—A—3,374,684, which is to be considered as being the nearest prior art document and discloses a carriage with two rollers operated respectively by two cams, which are made on opposed faces of a helicoidal projection on a rotary drum. This device comprises two carriages which move in opposite directions and are operated by two coaxial cams; it entails the same shortcomings and drawbacks as IT—A—730.874 discussed hereinafter.

The device of this invention also has the purpose of simplifying the operations of opening and closing the grippers, which are able to engage the material to be drawn whenever the carriage moves forwards.

Various known devices have the purpose of performing the operation of a draw carriage by means of cams on a rotatable drum.

For instance, a proposal in IT—A—730.874 is known which discloses a drum on which a cam is developed with a closed ring and protrudes with two surfaces lying substantially at right angles to the axis of the drum and positioned on the two sides of the protrusion. These surfaces have a discontinuous development with substantially parallel tracts and tracts which approach each other, this being made necessary by the geometry of the cam.

Although this system may be deemed advantageous for medium and low speeds, yet it entails noteworthy complications both during its embodiment and also when it is being installed and employed; moreover, it gives an unsatisfactory result when the gripper-bearing carriage has to be operated at high and medium speeds.

In particular, it involves problems linked to the construction of the cams themselves owing to the varying development of the cam walls, the question of spare parts and supplies being problematical.

GB—A—829,519 is known and discloses three carriages having their movements lying at angles of 120° to each other. The purpose of this is to ensure a continuous grip on the material to be drawn, thus entailing the advantage of actually having two carriages always engaged with the material.

However, this system involves the drawback that, when the two end carriages are engaged with the material, the latter bends. Moreover, this invention employs tapered operating rollers, and an upward component of the operating force is the result and leads to speedy deterioration of the carriage guides.

The technical problem solved by this invention lies in the provision of a system to actuate the opening and shutting of the grippers in coordination with the motion of rotation of the drum, such system actuating the grippers with a constant phase relationship in respect of the reciprocating motion of the carriages, such relationship not varying when the working conditions and, in particular, the drawing speed are varied.

It is also desired to provide a system which is not subject to accidental changes in operating conditions but ensures progressive actuation.

The purposes of the invention are attained by providing a device as described in the attached Claim 1.

A circular cam is envisaged together with two opposed thrust guides, these two opposed thrust guides having differentiated characteristics and functions but substantially parallel developments.

Two rollers, each having its own specific purpose, cooperate with the thrust guides, one roller having thrust functions and being substantially solidly fixed to the plate which bears the grippers, whereas the other roller has resetting functions and is fitted to a compensation carriage kept resiliently in position.

Owing to the conformation of the cam and to the arrangement employed on the carriage, it is possible to obtain a natural compensation at all the working points by means of an absorption of power, and a restoration of the same during and after the passing of such a point, and by means of continuous compensated contact.

It is also possible to reach high working speeds without generating vibrations or stoppages. Moreover, it is possible to obtain a continuity of functioning that coincides substantially with the theoretical formulation most advantageous for each specific case.

The invention is therefore embodied with a device to operate the movement of a draw carriage, the device comprising at least one control drum which bears on its circumference a cam closed in a ring extending over a revolution of 360°, the cam cooperating with at least one thrust roller substantially fixed solidly to the carriage that bears grippers, in which device the cam has a circumferential shape with two parallel opposed guide paths extending substantially radially at right angles to the axis of the drum, one of which guide paths cooperates with the thrust roller, whereas the other guide path cooperates with a resiliently resisted re-setting roller, the device being characterized in that operation of the grippers is effected by an actuation roller cooperating with a damped wedge-shaped means or with a path provided on the control drum and rotating with such drum, so as to obtain a constant phase relationship between the movement of the carriage and the actuation of the grippers and in that the circumferential shape of the cam consists of a circumferential groove.

Let us now seen an embodiment of the invention, shown here as a non-restrictive example, with the help of the attached figures, in which:—

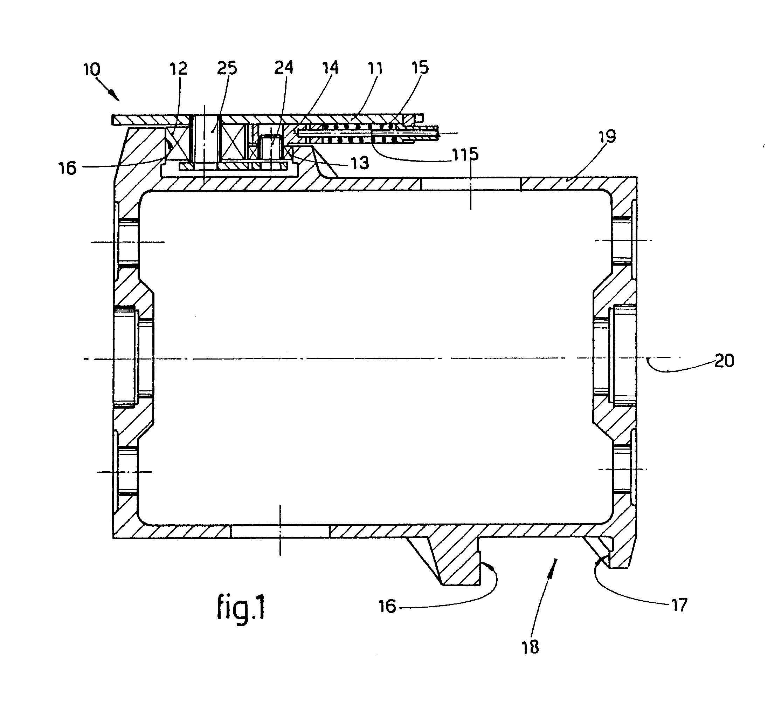

Fig. 1 shows a vertical section of an embodiment of the invention;

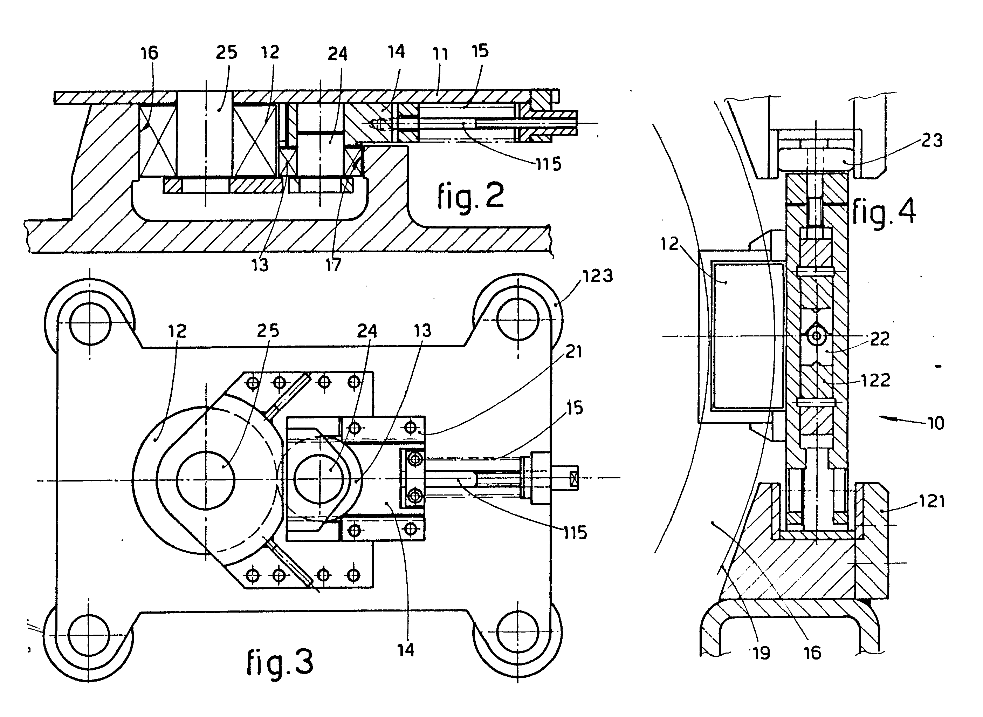

Fig. 2 shows the anchorage between the carriage which bears the grippers and the circular cam in an enlarged position;

Fig. 3 gives a view from below of the carriage which bears the grippers;

Fig. 4 shows a suitable vertical section of the carriage which bears the grippers;

Fig. 5 gives a plan view of the grippers and their relative operation;

Fig. 6 gives a partly cutaway side view of the means of Fig. 5;

Figs. 7, 8 and 9 show respective views of a variant of the embodiment of the invention from below, from the side and from above.

In the figures a carriage 10 which bears grippers 22 comprises a plate 11 to hold grippers; a pivot 25 which supports a thrust roller 12 rotatably is fixed firmly to the plate 11.

A compensation carriage 14 able to slide on guides 21 is located on the gripper-bearing plate 11 in cooperation with the pivot 25 and on a plane passing along the axis 20 of a drum 19. The carriage 14 holds in a stable manner a pivot 24 about which a resetting roller 13 can rotate.

The compensation carriage 14 is resisted resiliently by compensation spring means 15, which may possibly be guided on a suitable pin 115.

The thrust roller 12 cooperates with a thrust guide path 16 comprised in a circular cam 18. In every radial position the thrust guide path 16 lies substantially at right angles to the axis 20 of the drum 19.

The drum 19 having its axis 20 thus comprises a circular cam 18 which is closed over one full revolution of the drum 19. This cam 18 has, in front of the thrust guide path 16, a resetting and compensation guide path 17, with which a resetting roller 13 cooperates.

A plate 122 which supports the grippers 22 can cooperate with the plate 11 which bears the grippers 22 so as to obtain advantageous clamping action by the same 22.

The carriage 10 which bears the grippers 22 has normal guide wheels 23—123, which cooperate with linear guides 121.

Two guide systems can cooperate on one and the same axis so that while one system is in a drawing condition, the other system is in a resetting condition, thus providing a continuity of drawing which otherwise would not be possible.

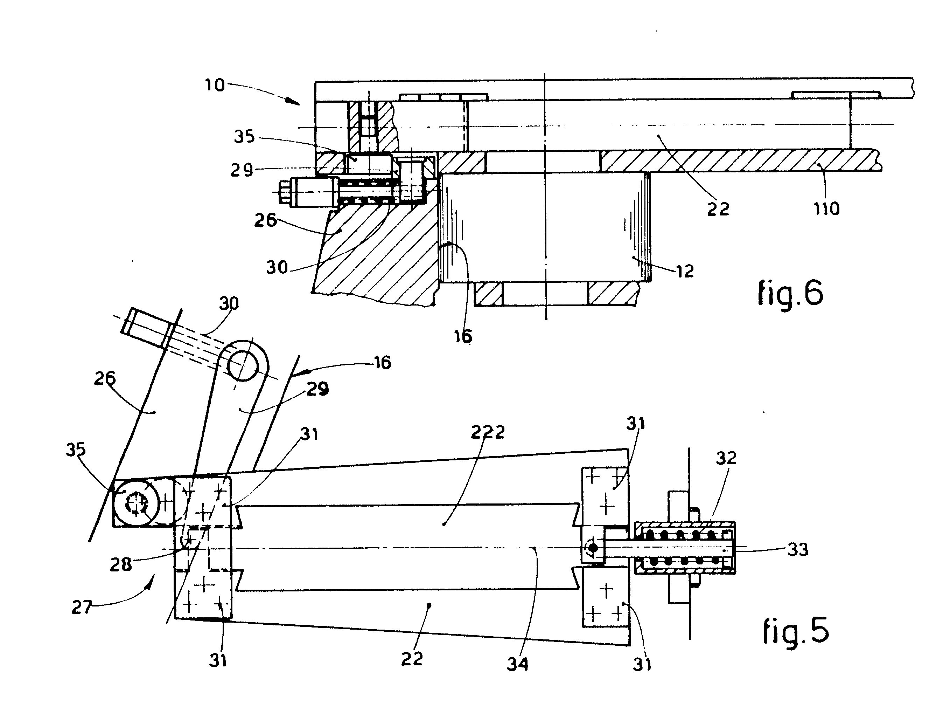

Figs. 5 and 6 show a possible embodiment to actuate the opening and closing of the grippers, or vice, 22.

The grippers, or vice, 22 are fitted above the base 110 of the carriage 10 in a known manner and, by moving within wedge-shaped guides which are not shown here, provoke the clamping or unclamping of the piece to be drawn, such piece to be drawn lying substantially along the drawing axis 34.

The grippers 22 have jaws 222 of a replaceable type fitted to them so as to grip the piece to be drawn.

A damped wedge-shaped means 29 is envisaged in cooperation with a shoulder 26 of the path 16 (but could also be present on the drum 19) and is able to swing on an oscillation pivot 28 and has a wedge-shaped form, as we said above.

The form of the damped wedge-shaped means 29 is such that, during the coordinated forward movement of the gripper-bearing carriage 10 in relation to the thrust path 16, the presence of an actuation roller 35 cooperating with the grippers 22 causes an auxiliary sideways displacement of the grippers 22 towards their closure position.

The position of the damped wedge-shaped means 29 in relation to the thrust path 16 is such as to actuate the actuation roller 35 in cooperation with the instantaneous moment at which the grippers 22 have to clamp the piece to be drawn.

The damped wedge-shaped means 29 cooperates with a damper spring 30, which serves to cushion the impact of the actuation roller 35 and also serves to facilitate non-destructive clamping of the grippers 22 against the piece to be drawn.

Fig. 5 shows how the wedge 29 able to swing is lodged in a lateral path 27 provided in a shoulder 26 of the thrust path 16.

In the embodiment of Fig. 5 the wedge 29 is shown in its position of maximum travel for its clamping action, whereas the actuation roller 35 is shown in its closure position and (with lines of dashes) in its position at the start of closure operations.

When the carriage 10 reaches the end of its run for the active drawing of the piece to be drawn, the inertias involved and the cooperation of an opener spring means 32 (loaded during clamping action) cooperating with an opener shaft 33 cause the grippers 22 to be thrust in a direction opposite to the action exerted beforehand by the wedge 29. The opening of the grippers 22 themselves is obtained in this way.

The mutual transmission of movements and the coordination of the movement of the grippers 22 are obtained by suitable terminal drawing means 31, which transmit the movements from one gripper 22 to the other and create the necessary suitable cooperation.

If so required, two actuation rollers 35 can be provided and be positioned differently, each of them cooperating with a gripper 22, the two rollers 35 working in coordination either with one double damped wedge means 29 or with two damped wedge means 29.

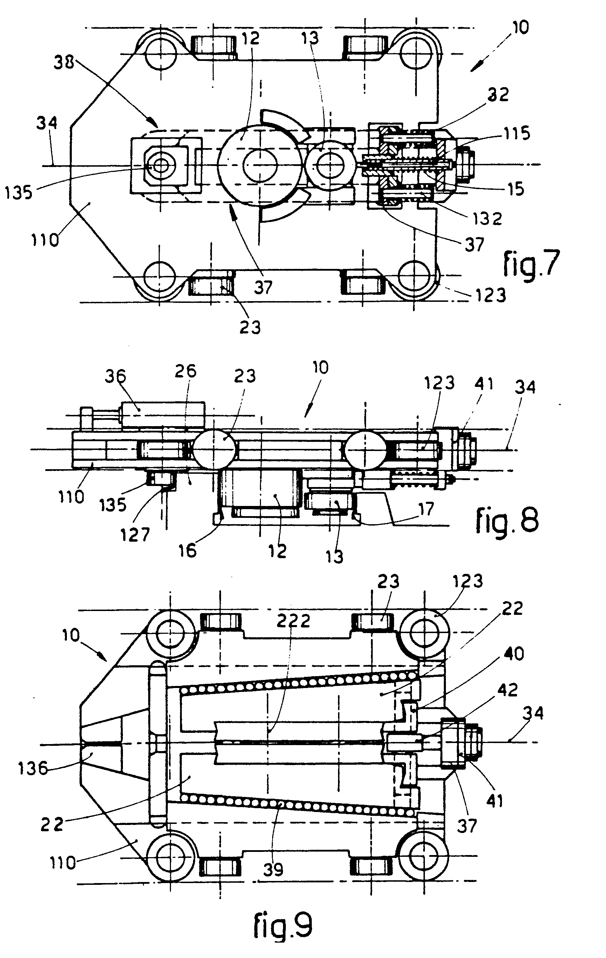

According to a variant shown in Figs. 7, 8 and 9 a path 127 is provided on the same shoulder 26 of the path 16. This path 127 governs the movement of a roller 135, which in its turn is solidly fixed to a slider means 37, which can slide lengthwise along the carriage 10 and, in this case, is connected from below to the grippers 22 in a known manner. For instance, this connection can be made with restrained joint means such as pins, projections, locking pins, etc.

For the positive actuation of closure of the grippers 22 the path 127 comprises suitable raised portions to act on the roller 135, which is displaced towards the left in Fig. 8.

In this way the slider 27 too forces the grippers 22 towards the left (see Fig. 9) in their closure direction.

The timing embodied in the path 127 enables the instant of closure of the grippers 22 to be determined.

The conformation of the path 127 enables the grippers 22 to be closed gently and in a non-destructive manner against the piece to be drawn.

In the example of Fig. 9 the grippers 22 cooperate slidably with lengthwise guide means 38 positioned at an angle to the draw axis 34 so as to create a wedging of the grippers 22 themselves between the guide means 38.

Sliding of the grippers 22 is facilitated by rolling means 39 such as rollers or balls.

Opener spring means 32 with guide pins 132 cooperate with the inertia of the grippers 22 so as to open the latter 22, as we said earlier. The spring means 32 also perform a cushioning action when the grippers 22 are being closed, so as to obtain a gentle engagement of the piece to be drawn.

Fig. 8 and 9 show actuator means 36 which drive gripper jaws 136 for initial engagement of the piece to be drawn at the beginning of draw operations.

After such engagement and when the carriage 10 has been retracted for the first time, the jaws 136 are opened for the start of normal working.

The variant shown also envisages adjustment means to take up the play and to set the initial opening of the grippers 22. Such adjustment is carried out by means of a threaded sleeve 42 through which the drawn material passes. The sleeve 42 is solidly fixed to the carriage 10 and is threaded outwardly.

A ring nut 41, which is shown diagrammatically, cooperates with the threaded surface of the sleeve 42 and enables the movement of the slider 37 in relation to the sleeve 42 itself and therefore to the carriage 10 to be adjusted.

The fitted jaws 222 (see Fig. 9) can be removed from above in the embodiment shown after removal of clamp means 40 screwed onto the rear part of the grippers 22.

## Claims

1. Device to operate the movement of a draw carriage, the device comprising at least one control drum (19) which bears on its circumference a cam (18) closed in a ring extending over a revolution of 360°, the cam (18) cooperating with at least one thrust roller (12) substantially fixed solidly to the carriage (10) that bears grippers (22), in which device the cam (18) has a circumferential shape with two parallel opposed guide paths (16—17) extending substantially radially at right angles to the axis (20) of the drum (19), one of which guide paths (16) cooperates with the thrust roller (12), whereas the other guide path (17) cooperates with a resiliently resisted re-setting roller (13), the device being characterized in that operation of the grippers (22) is effected by an actuation roller (35—135) cooperating with a damped wedge-shaped means (29) or with a path (127) provided on the control drum (19) and rotating with such drum (19), so as to obtain a constant phase relationship between the movement of the carriage (10) and the actuation of the grippers (22) and in that the circumferential shape of the cam (18) consists of a circumferential groove.

2. Device as claimed in Claim 1, in which the actuation roller (35) is structurally fixed solidly to at least one gripper (22).

3. Device as claimed in Claim 1 or 2, in which the damped wedge-shaped means (29) has damper spring means (30) and advantageously an oscillation pivot (28).

4. Device as claimed in any Claim hereinbefore, in which the opener spring means (32) are loaded during the clamping phase and act in the opposite direction to the action exerted by the damped wedge-shaped means (29) on the actuation roller (35).

5. Device as claimed in any Claim hereinbefore, in which the grippers (22) are linked by drawing means (31).

6. Device as claimed in Claim 1, in which the actuation roller (135) is solidly fixed to a slider means (37) which cooperates at least momentarily with the grippers (22) (Figs. 7 to 9).

7. Device as claimed in any Claim hereinbefore, which comprises means (41—42) to adjust the travel of the slider means (37).

## Patentansprüche

1. Vorrichtung zur Steuerung der Bewegung eines Ziehwagens, mit zumindest einer Steuertrommel (19), die an ihrem Umfang eine zu einem, sich über einen Umlauf von 360° erstreckenden Ring geschlossene Nocke (18) trägt, wobei die Nocke (18) mit zumindest einer Schubrolle (12) zusammenwirkt, die im wesentlichen fest an dem die Greifer (22) tragenden Wagen (10) befestigt ist, die Nocke (18) bei dieser Vorrichtung eine rundumlaufende Form mit zwei parallelen, einander gegenüberliegenden Führungsbahnen (16, 17) aufweist, welche sich im wesentlichen radial in rechten Winkeln zur Achse (20) der Trommel (19) erstrecken und eine der Führungsbahnen (16) mit der Schubrolle (12) zusammenwirkt, wogegen die andere Führungsbahn (17) mit einer elastisch abgestützten Rücksetzrolle (13) zusammenwirkt, dadurch gekennzeichnet, daß die Bewegung der Greifer (22) durch eine Steuerrolle (35, 135) bewirkt wird, die mit einer gedämpften, keilförmigen Einrichtung (29) oder mit einer auf der Steuertrommel (19) vorgesehenen und mit dieser rotierenden Bahn (127) zusammenwirkt, sodaß eine konstante Phasenbeziehung zwischen der Bewegung des Wagens (10) und der Bewegung der Greifer (22) erhalten wird und daß die rundumlaufende Form der Nocke (18) einer rundumlaufenden Rille entspricht.

2. Vorrichtung nach Anspruch 1, dadurch gekennzeichnet, daß die Steuerrolle (35) baulich fest an zumindest einem Greifer (22) befestigt ist.

3. Vorrichtung nach Anspruch 1 oder 2, dadurch gekennzeichnet, daß die gedämpfte keilförmige Einrichtung (29) ein Dämpfungsfedermittel (30) und vorteilhafterweise eine Pendelachse (28) aufweist.

4. Vorrichtung nach irgendeinem der vorgehenden Ansprüche, bei welcher die Öffnungsfedermittel (32) während der Greifphase gespannt werden und in die zu jener Wirkung entgegengesetzte Richtung wirken, die von der gedämpften, keilförmigen Einrichtung (29) auf die Steuerrolle (35) ausgeübt wird.

5. Vorrichtung nach irgendeinem der vorgehenden Ansprüche, bei welcher die Greifer (22) mit Hilfe einer Zieheinrichtung (31) aneinander gelenkt sind.

6. Vorrichtung nach Anspruch 1, bei welcher die Steuerrolle (135) fest mit einer Gleiteinrichtung (37) verbunden ist, welche zumindestens vorübergehend mit den Greifern (22) zusammenwirkt (Fig. 7 bis 9).

7. Vorrichtung nach irgendeinem der vorgehenden Ansprüche, welche eine Einrichtung (41, 42) zum Justieren der Bewegung der Gleiteinrichtung (37) enthält.

### Revendications

1. Dispositif pour commander le mouvement d'un chariot d'étirage, le dispositif comprenant au moins un tambour de commande (19) qui porte sur sa circonférence une came (18) en anneau fermé qui s'étend sur les 360° d'un tour, la came (18) coopérant avec au moins un galet de poussée (12) fixé sensiblement rigidement au chariot (10) qui porte les pinces (22), dispositif dans lequel la came (18) possède une forme circonférentielle munie de deux chemins de guidage (16—17) opposés et parallèles qui s'étendent sensiblement radialement perpendiculairement à l'axe (20) du tambour (19), l'un de ces chemins de guidage (16) coopérant avec le galet de poussée (12) tandis que l'autre chemin de guidage (17) coopère avec un galet de retour (13) chargé par une résistance élastique, le dispositif étant caractérisé en ce que la manoeuvre des pinces (22) est effectuée par un galet d'actionnement (35—135) qui coopère avec des moyens amortis en forme de coin (29), ou avec un chemin (127) prévu sur le tambour de commande (19) et qui tourne avec ce tambour (19) de manière à obtenir une relation de phase constante entre le mouvement du chariot (10) et la manoeuvre des pinces (22), et en ce que la forme circonférentielle de la came (18) est constituée par une gorge circonférentielle.

2. Dispositif selon la revendication 1, caractérisé en ce que le galet de manoeuvre (35) est fixé structurellement solidairement à au moins une pince (22).

3. Dispositif selon la revendication 1 ou 2, caractérisé en ce que les moyens amortis en forme de coin (29) possèdent des moyens élastiques (30) formant amortisseurs et avantageusement un pivot d'oscillation (28).

4. Dispositif selon une revendication quelconque précédente, caractérisé en ce que les moyens d'ouverture élastiques (32) sont chargés pendant la phase de serrage et agissent en sens inverse de l'action exercée par les moyens amortis en forme de coin (29) sur le galet de manoeuvre (35).

5. Dispositif selon une revendication précédente quelconque, caractérisé en ce que les pinces (22) sont liées par des moyens de traction (31).

6. Dispositif selon la revendication 1, caractérisé en ce que le galet de manoeuvre (135) est fixé solidairement à un coulisseau (37) qui coopère au moins momentanément avec les pinces (22) (figures 7 à 9).

7. Dispositif selon une revendication précédente quelconque, caractérisé en ce qu'il comprend des moyens (41—42) permettant de régler la course du coulisseau (37).

fig.1

0 112 805

fig. 4

fig. 2

fig. 3

fig.6

fig.5

0 112 805

fig.7

fig.8

fig.9